# FASCICULE DE BREVET EUROPEEN

(11) **EP 1 408 267 B1**
(45) Date de publication et mention de la délivrance du brevet: **20.12.2006**
(21) Numéro de dépôt: 03292294.0
(22) Date de dépôt: 18.09.2003
(51) Int. Cl.: F16L 9/12, B32B 1/08, B32B 27/08, F16L 11/04

(54) **Conduite pour le transport de fluides contenant de l'hydrogène**
Rohrleitung für den Transport von Flüssigkeiten enthaltendes Hydrogen
Pipe for carrying fluids comprising hydrogene

(30) Priorité: 07.10.2002 FR 0212409
(43) Date de publication de la demande: 14.04.2004
(73) Titulaire: NOBEL PLASTIQUES, 78300 Poissy (FR)
(72) Inventeur: Cheng, Cyrielle, 85160 Saint-Jean de Monts (FR); Milhas, Pierre, 51300 Vitry Le Francois (FR)
(74) Mandataire: Lavialle, Bruno François Stéphane

(56) Documents cités:
- EP-A- 0 659 535
- EP-A- 0 754 897

## Description

La présente invention concerne une conduite pour le transport de fluides et en particulier de gaz contenant de l'hydrogène.

### ARRIERE PLAN DE L'INVENTION

Les contraintes environnementales s'appliquant au domaine des transports ont incité les industriels à rechercher de nouvelles motorisations pour les véhicules automobiles. Parmi celles-ci, les motorisations électriques semblent les plus simples à mettre en oeuvre mais posent un problème de stockage de l'énergie électrique sur le véhicule. En effet, les accumulateurs actuels sont relativement lourds et encombrants et permettent une autonomie suffisante pour parcourir seulement une centaine de kilomètres.

On a donc pensé à remplacer les accumulateurs classiques par une pile à combustible. Une pile à combustible fonctionne selon le principe de l'électrolyse inverse. Un combustible, généralement l'hydrogène, et un comburant, généralement l'oxygène, sont associés pour provoquer une réaction chimique produisant de l'électricité. L'hydrogène est alors stocké dans un réservoir sous pression embarqué à bord du véhicule. Il est également possible de produire l'hydrogène sur le véhicule à partir du reformage d'un hydrocarbure contenu dans un réservoir sous pression embarqué dans le véhicule.

Le transfert de l'hydrogène ou du reformat (le mélange gazeux qui contient de l'hydrogène et qui est issu du reformage) est réalisé au moyen de conduites réalisées en acier afin de résister à des températures (100°C ou plus) et des pressions (de l'ordre de 5 bars) relativement élevées. L'acier présente en outre l'avantage d'être sensiblement inerte vis-à-vis de l'hydrogène, ce qui permet d'éviter que la conduite se décompose dans le gaz et vienne polluer et/ou déclencher des réactions secondaires parasites avec les électrodes de la pile.

Cependant, l'oxygène tend à provoquer une dégradation de l'acier. En outre, les canalisations en acier sont relativement lourdes, peu flexibles et coûteuses.

### OBJET DE L'INVENTION

Un but de l'invention est de fournir un moyen de transport de gaz contenant de l'hydrogène remédiant aux inconvénients précités.

### BREVE DESCRIPTION DE L'INVENTION

A cet effet, on prévoit, selon l'invention, une conduite pour le transport d'un fluide contenant de l'hydrogène, comprenant de l'intérieur vers l'extérieur :
- une couche comportant un matériau thermoplastique à base fluorée,
- une couche comportant un alcool de vinyle éthylène,
- et une couche comportant un téréphtalate de polybutylène.

La conduite ainsi réalisée est plus légère, plus flexible et moins coûteuse qu'une conduite équivalente en acier. En outre, cette conduite assure une fonction barrière à l'hydrogène et à l'oxygène.

La couche en matériau à base fluorée joue ici le rôle de barrière à l'hydrogène alors que ces matériaux sont habituellement connus pour leur faible perméabilité aux alcools.

La couche en alcool de vinyle éthylène assure dans cette structure une triple fonction, à savoir qu'il sert de barrière à l'hydrogène et qu'il est peu perméable à l'oxygène que celui-ci provienne soit de l'extérieur soit de l'intérieur de la conduite (dans ce dernier cas, l'oxygène en question est celui contenu dans le reformat).

La couche en téréphtalate de polybutylène assure ici d'une part une fonction de barrière à l'hydrogène et d'autre part une fonction de protection de la conduite contre les agressions extérieures.

D'autres caractéristiques et avantages de l'invention ressortiront à la lecture de la description qui suit d'un mode de réalisation particulier non limitatif de l'invention.

### BREVE DESCRIPTION DES DESSINS

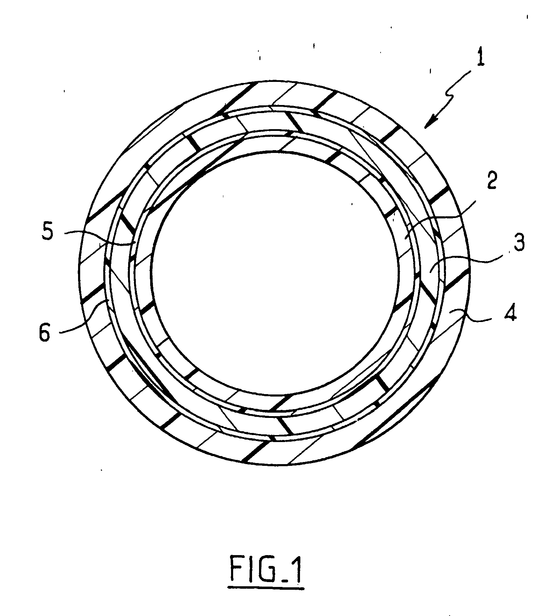

Il sera fait référence à la figure unique annexée représentant en coupe transversale une conduite selon l'invention.

### DESCRIPTION DETAILLEE DE L'INVENTION

En référence à la figure, la conduite conforme à l'invention, généralement désignée en 1, comporte une couche interne 2 réalisée en un matériau à base fluoré et plus particulièrement ici en fluorure de polyvinylediène (PVDF). D'autres matériaux thermoplastiques à base fluorée sont utilisables et notamment le propylène d'éthylène-éthylène fluoré (EFEP) ou le tétrafluoroéthylène d'éthylène (ETFE).

La conduite 1 comprend une couche intermédiaire 3 qui est réalisée en alcool de vinyle éthylène (EVOH) et une couche externe 4 en téréphtalate de polybutylène (PBT).

Entre la couche interne 2 et la couche intermédiaire 3 et entre la couche intermédiaire 3 et la couche externe 4, sont disposées des couches de liaison 5, 6 réalisées en un adhésif qui présente des propriété d'adhésion vis-à-vis des matériaux constituant la couche interne 2, la couche intermédiaire 3 et la couche externe 4. L'adhésif utilisé est ici à base de polyuréthane.

La conduite ainsi réalisée est relativement légère, flexible et peu coûteuse. En outre, cette conduite assure une fonction barrière à l'hydrogène et à l'oxygène.

Bien entendu, l'invention n'est pas limitée au mode de réalisation décrit et on peut y apporter des variantes de réalisation sans sortir du cadre de l'invention tel que défini par les revendications.

En particulier, lorsque les matériaux des couches interne, intermédiaire et externe présentent des propriétés d'adhésion suffisantes vis-à-vis des couches adjacentes, il est possible de se passer de la ou des couches de liaison.

## Revendications

1. Conduite (1) pour le transport d'un fluide contenant de l'hydrogène, **caractérisée en ce qu**'elle comprend de l'intérieur vers l'extérieur :
- une couche (2) comportant un matériau thermoplastique à base fluorée,
- une couche (3) comportant un alcool de vinyle éthylène,
- et une couche (4) comportant un téréphtalate de polybutylène.

2. Conduite selon la revendication 1, **caractérisée en ce que** le matériau thermoplastique à base fluorée est un propylène d'éthylène éthylène fluoré.

3. Conduite selon la revendication 1, **caractérisée en ce que** le matériau thermoplastique à base fluorée est un tétrafluoroéthylène d'éthylène.

4. Conduite selon la revendication 1, **caractérisée en ce que** le matériau thermoplastique à base fluorée est un fluorure de polyvinylediène.

5. Conduite selon l'une quelconque des revendications précédentes, **caractérisée en ce qu**'au moins deux des couches sont séparées par une couche d'adhésif (5, 6).

6. Conduite selon la revendication 5, **caractérisée en ce que** l'adhésif est à base de polyuréthane.

## Claims

1. A hose (1) for transporting a fluid containing hydrogen, the hose being **characterized in that** it comprises from the inside towards the outside:
· a layer (2) comprising a fluorine-based thermoplastic material;
· a layer (3) comprising a vinyl ethylene alcohol; and
· a layer (4) comprising a polybutylene terephthalate.

2. A hose according to claim 1, **characterized in that** the fluorine-based thermoplastic material is ethylene fluorinated ethylene propylene.

3. A hose according to claim 1, **characterized in that** the fluorine-based thermoplastic material is an ethylene tetrafluoroethylene.

4. A hose according to claim 1, **characterized in that** the fluorine-based thermoplastic material is a polyvinylidene fluoride.

5. A hose according to any preceding claim, **characterized in that** at least two of the layers are bonded together by an adhesive layer (5, 6).

6. A hose according to claim 5, **characterized in that** the adhesive is based on polyurethane.

## Patentansprüche

1. Leitung (1) für den Transport eines Fluids, das Wasserstoff enthält, **dadurch gekennzeichnet, dass** sie von innen nach außen umfasst:
- eine Schicht (2), die ein thermoplastisches Material auf Fluorbasis enthält,
- eine Schicht (3), die einen Ethylenvinylalkohol enthält,
- eine Schicht (4), die ein Polybutylenterephthalat enthält.

2. Leitung nach Anspruch 1, **dadurch gekennzeichnet, dass** das thermoplastische Material auf Fluorbasis ein Ethylen-Fluor-Ethylen-Propylen ist.

3. Leitung nach Anspruch 1, **dadurch gekennzeichnet, dass** das thermoplastische Material auf Fluorbasis ein Ethylen-Tetrafluor-Ethylen ist.

4. Leitung nach Anspruch 1, **dadurch gekennzeichnet, dass** das thermoplastische Material auf Fluorbasis ein Polyvinylidenfluorid ist.

5. Leitung nach einem der vorhergehenden Ansprüche, **dadurch gekennzeichnet, dass** mindestens zwei der Schichten durch eine Klebeschicht (5, 6) getrennt sind.

6. Leitung nach Anspruch 5, **dadurch gekennzeichnet, dass** der Klebstoff auf Polyurethanbasis ist.
